# EUROPEAN PATENT APPLICATION

(11) **EP 4 382 555 A1**
(43) Date of publication of application: **12.06.2024**
(21) Application number: 23212318.2
(22) Date of filing: 27.11.2023
(51) Int. Cl.: C08J 3/22, C08L 23/04, C08L 23/10, C08L 23/16, C08L 23/18, C08K 5/00, C08L 23/06, C08K 3/04, C08K 3/22

(54) **POLYMER COMPOSITION AND COLOR MASTERBATCH RESISTANT TO COLOR POWDER PRECIPITATION, AND ARTIFICIAL LEATHER**

(30) Priority: 05.12.2022 CN 202211549685
(71) Applicant: Benecke-Changshun Auto Trim (Zhangjiagang) Co., Ltd., Zhangjiagang, Jiangsu 215632 (CN)
(72) Inventor: Qin, Minglei, 30165 Hannover (DE); Pan, Sheng, 30165 Hannover (DE); Xu, Jinlong, 30165 Hannover (DE); Zhu, Hui, 30165 Hannover (DE); Ma, Yao, 30165 Hannover (DE)
(74) Representative: Continental Corporation

(57) **Abstract**

The present invention relates to a polymer composition resistant to color powder precipitation, the polymer composition containing a color powder system in which an inorganic color powder and carbon black are mixed, wherein the carbon black contains acidic carbon black obtained by oxidation. The present invention also relates to a color masterbatch resistant to color powder precipitation, comprising an inorganic color powder, carbon black and a dispersing resin, wherein the carbon black contains acidic carbon black obtained by oxidation. The present invention also relates to an artificial leather, comprising a skin prepared from the polymer composition. The technical problem solved by the present invention is to prevent precipitation of inorganic color powder during processing.

## Description

### Technical field

The present invention relates to a polymer composition resistant to color powder precipitation, a color masterbatch resistant to color powder precipitation, and an artificial leather.

### Background art

In the manufacture of rubber and plastic products, color masterbatch is generally added to adjust the required color. Organic color powders and inorganic color powders are generally used as color powders in color masterbatches currently in use. Organic color powders have the characteristics of bright colors and broad color coverage, and are used in many color masterbatches. Inorganic color powders have the advantage of superiority in terms of cost and aging resistance, so are also used very widely in the color masterbatch industry. However, when inorganic color powder is used in rubber and/or plastic compositions such as thermoplastic polyolefin (TPO) compositions, the problem of the color powder easily precipitating is present due to poor compatibility between organic resin and inorganic color powder. The greater the difference in polarity between the organic resin and the inorganic color powder, the less compatible they are and the more severe the color powder precipitation. The compatibility between non-polar resin and inorganic color powder is especially poor, so color powder precipitation is especially severe. When color powder precipitates, this is specifically manifested as accumulation of precipitated material of various colors on surfaces of the extruder screw, die head, die lip and other places. If the extruder continues to be operated for a long period of time with deposits accumulated at the die lip and extruder outlet, the rubber or plastic skin will be scratched and scratch marks of a different color will form, so that there is no choice but to interrupt production and clean the die; this has a severe impact on normal extruding production and increases the product rejection rate.

To solve the abovementioned compatibility problem, solutions up till now have mainly improved the compatibility between the inorganic color powder and organic system by subjecting the inorganic color powder (nano/micro particles of inorganic matter) to surface modification, e.g. surface coating. For example, a silicon- or aluminum-containing salt is made into a solution, and a layer of inorganic coating is deposited on the surface of the inorganic color powder by precipitation, etc., before performing various forms of organic surface modification; alternatively, organic surface modification is performed directly. This method has the following drawbacks: firstly, the cost of surface treatment of the color powder is high, and the treatment is not uniform; secondly, with regard to the production result, the problem of color powder precipitation cannot be completely solved; and thirdly, with regard to the treated product, the choice of surface coating for the color powder must be matched to the product system, so universality is poor.

Thus, the present invention needs to propose a novel technical solution to solve at least one of the many technical problems mentioned above.

### Summary of the invention

Based on the prior art described above, an objective of the present invention is to provide a polymer composition and an artificial leather obtained therefrom, and also to provide a color masterbatch, the composition and the color masterbatch being able to effectively prevent inorganic color powder from precipitating during processing.

To achieve the abovementioned technical objective, the present invention proposes a polymer composition resistant to color powder precipitation, the polymer composition containing a color powder system in which an inorganic color powder and carbon black are mixed, wherein the carbon black contains acidic carbon black obtained by oxidation.

The crux of the present invention is the use of a mixture of acidic carbon black and inorganic color powder. As a carbon material itself, carbon black has good compatibility with organic resin in the composition, and will experience virtually precipitation. Large numbers of polar groups such as carboxyl (-COOH) and hydroxyl (-OH) are formed on the surface of acidic carbon black by oxidation, and these exhibit acidity, thus massively increasing interaction with inorganic material. Thus, the compatibility of the inorganic color powder and the organic matter system is improved effectively by means of the acidic carbon black.

Preferably, the acidic carbon black used in the present invention is high-structure carbon black, having a specific surface area of 100 - 1000 m²/g or greater than 1000 m²/g; the number of polar groups on the surface is thereby increased, so that interaction with inorganic color powder is stronger. Carbon black aggregates form three-dimensional branched structures or clusters through fusion of smaller units referred to as primary particles, wherein grades of carbon black that allow the aggregation of particles to form relatively large and complex aggregates are referred to as high-structure carbon blacks, which have a relatively high specific surface area; conversely, grades of carbon black with a minimal aggregation range are referred to as low-structure carbon blacks.

To obtain high-structure acidic carbon black, it may be prepared by the channel method for example; the specific surface area of channel carbon black may be 100 - 1200 m²/g, and the pH may be 3 - 6. In addition, the furnace method and lamp black may also be used to prepare acidic carbon black, with a specific surface area smaller than the level of carbon black obtained by the channel method. Compared with carbon black products made by other methods, channel carbon black has finer particles and a larger specific surface area; furthermore, due to the use of a specific production method, the surface thereof is oxidized, and exhibits acidity due to containing a large number of oxygen-containing functional groups.

Preferably, the color powder system contains an organic color powder. The further addition of organic color powder on the basis of inorganic color powder helps to achieve a brighter color for example.

Preferably, the carbon black consists of the acidic carbon black alone. In systems in which precipitation is severe, the use of acidic carbon black alone as the carbon black in the composition is especially effective at preventing color powder from precipitating.

According to the present invention, the polymer composition is a rubber and/or plastic composition. Specifically, the polymer composition is a rubber composition, a plastic composition or a mixture of both.

Rubber and/or plastic products suitable for the present invention may be non-polar rubber and/or plastic systems, such as polypropylene (PP), polyethylene (PE), thermoplastic polyolefins (TPO), thermoplastic vulcanisates (TPV), polyolefin elastomers (POE) and other polyolefin systems, and may also be polar rubber and/or plastic systems, such as polyvinyl chloride (PVC) systems. The main component of the system is for example a resin as mentioned above, with the addition of color powder and other aids. The terms "non-polar" and "polar" mentioned here both refer to the polar characteristics of the resin in the system. Corresponding suitable application fields may be single-screw extrusion and twin-screw extrusion, and use is also possible in associated plastics processing fields such as injection molding and film-casting.

According to an embodiment of the present invention, the polymer composition comprises a non-polar resin. The compatibility of the non-polar resin and the inorganic color powder is poor, and the addition of acidic carbon black is especially effective at preventing color powder from precipitating.

According to an embodiment of the present invention, the resin in the polymer composition is one or more of PP, PE, TPO, TPV or POE.

With regard to the way in which the color powder system is added to the polymer composition, carbon black may be premixed with inorganic color powder and possibly present organic color powder by means of a dispersing resin and other dispersion aids, to make color masterbatch by extrusion for example, and the color masterbatch is then added to the composition system to prepare the product by processing; it is also possible to add carbon black to the target system directly rather than by means of a dispersing resin, for use with inorganic color powder and organic color powder or with color masterbatch containing inorganic color powder. Both of these methods can mitigate the problem of inorganic color powder precipitation.

In the present invention, the color powder system is preferably contained in the polymer composition in the form of color masterbatch.

Further preferably, the color masterbatch contains a dispersing resin. The dispersing resin has the same polarity as the composition resin. For example, for a non-polar composition resin, a non-polar resin is chosen as the dispersing resin in the color masterbatch, e.g. PP or PE. More preferably, the dispersing resin in the color masterbatch is the same resin as the composition resin, thereby improving compatibility more effectively. For example, in the case of a TPO composition (i.e. the composition resin is a TPO resin), the dispersing resin in the color masterbatch is preferably a TPO resin.

The color masterbatch thus prepared contains the acidic carbon black, inorganic color powder, possibly present organic color powder, and dispersing resin, and the addition of the color masterbatch thus prepared to the rubber and/or plastic composition during processing can avoid non-uniform dispersion of color powder and dust pollution.

Preferably, based on the total weight of color masterbatch containing acidic carbon black, inorganic color powder, possibly organic color powder, and dispersing resin, the content of the acidic carbon black in the color masterbatch is more than 0 wt% but not more than 70 wt%, preferably not more than 50 wt%. The specific acidic carbon black content may be adjusted according to the severity of precipitation and color requirements; too high a content will make processing difficult.

Preferably, to ensure that the rubber and/or plastic composition and the product made therefrom have high mechanical performance, based on the total weight of color masterbatch containing acidic carbon black, inorganic color powder, possibly organic color powder, and dispersing resin, the content of the acidic carbon black in the color masterbatch is not more than 20 wt%, preferably not more than 10 wt%.

To achieve the abovementioned technical objective, the present invention further proposes a color masterbatch resistant to color powder precipitation, comprising an inorganic color powder, carbon black and a dispersing resin, wherein the carbon black contains acidic carbon black obtained by oxidation. Preferably, the carbon black consists of the acidic carbon black alone.

Preferably, the acidic carbon black is high-structure carbon black, having a specific surface area of 100 - 1000 m²/g or greater than 1000 m²/g.

As stated above, the acidic carbon black effectively improves the compatibility of organic resin and the inorganic color powder in the color masterbatch, so that color powder will not precipitate during processing of the color masterbatch.

The explanations relating to the acidic carbon black and color powder system in the description of the polymer composition above are likewise applicable to the color masterbatch.

Inorganic color powders suitable for the present invention include iron-based, chromium-based, TiO₂, cadmium-based, ultramarine and other inorganic pigments. The color powder system may be purely inorganic matter, or a color masterbatch system in which inorganic matter and organic matter are mixed. In the case of a system in which precipitation is severe, the content of acidic carbon black may be increased appropriately.

To achieve the abovementioned technical objective, the present invention further proposes an artificial leather, comprising a skin prepared from the abovementioned polymer composition according to the present invention.

The present invention has the following advantages: good compatibility is achieved between the inorganic color powder and the organic system through the addition of acidic carbon black, so that when a rubber/plastic product or color masterbatch is prepared by extrusion, inorganic color powder will not precipitate. As a result, the production efficiency is greatly improved, with no need to remove the die head frequently for cleaning, and the rejection rate is greatly reduced, with no scratching of the extruded rubber/plastic skin or color masterbatch strip, which would result in rejects. In the preparation of color masterbatch, the invention can also make the color matching of color masterbatch more precise and uniform.

### Particular embodiments

To enable those skilled in the art to better understand the technical solution of the present invention, said technical solution is described clearly and completely below in conjunction with examples and comparative examples. Obviously, the examples described are some, not all, of the examples of the present invention. All other examples obtained by those skilled in the art without creative effort are included in the scope of protection of the present invention.

### Example 1

A TPO skin is prepared by the following steps:
1) Providing acidic carbon black: prepared by the channel method, wherein natural gas as a raw material undergoes incomplete combustion with air in a naturally ventilated "fire room" via thousands of ceramic burners to form fishtail-shaped diffusion flames, the reducing layer of which contacts slowly reciprocating channel steel, such that the carbon black produced by pyrolysis is deposited on the channel steel surface; the carbon black is scraped off by a scraper disposed on a funnel and falls into the funnel, subsequently being outputted by a screw conveyor and granulated to obtain acidic carbon black with a specific surface area of at least 120 m²/g.
2) Preparing color masterbatch: color powders, acidic carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| acidic carbon black | 0.55 parts by weight |
| Fe2O3 | 0.05 parts by weight |
| Cr₂O₃.Sb₂O₃.31TiO₂ | 0.05 parts by weight |
| TPO | balanced to 100 parts by weight |

3) Preparing TPO skin: 100 parts by weight of TPO resin, 3 parts by weight of the color masterbatch obtained in step 2 and 1 part by weight of a stabilizer are added to a twin-screw extruder; the components are heated to melt and mixed evenly, and the mixture is extruded at an extrusion temperature of 160 - 220°C, to obtain a TPO skin.

### Example 2

A TPO skin is prepared by the following steps:
1) Providing acidic carbon black: prepared by the channel method, as in Example 1.
2) Preparing color masterbatch: color powders, acidic carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| acidic carbon black | 0.55 parts by weight |
| organic red | 0.05 parts by weight |
| Cr₂O₃.Sb₂O₃.31TiO₂ | 0.05 parts by weight |
| TPO | balanced to 100 parts by weight |

3) Preparing TPO skin: 100 parts by weight of TPO resin, 3 parts by weight of the color masterbatch obtained in step 2 and 1 part by weight of a stabilizer are added to a twin-screw extruder; the components are heated to melt and mixed evenly, and the mixture is extruded at an extrusion temperature of 160 - 220°C, to obtain a TPO skin.

### Example 3

A TPO skin is prepared by the following steps:
1) Providing acidic carbon black: prepared by the channel method, as in Example 1.
2) Preparing color masterbatch: color powders, acidic carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| acidic carbon black | 3 parts by weight |
| ZnFe₂O₄ | 0.10 parts by weight |
| TPO | balanced to 100 parts by weight |

3) Preparing TPO skin: 100 parts by weight of TPO resin, 3 parts by weight of the color masterbatch obtained in step 2 and 1 part by weight of a stabilizer are added to a twin-screw extruder; the components are heated to melt and mixed evenly, and the mixture is extruded at an extrusion temperature of 160 - 220°C, to obtain a TPO skin.

### Example 4

A TPO skin is prepared by the following steps:
1) Providing acidic carbon black: prepared by the channel method, as in Example 1.
2) Preparing color masterbatch: color powders, acidic carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| acidic carbon black | 8 parts by weight |
| organic red yellow | 0.10 parts by weight |
| TPO | balanced to 100 parts by weight |

3) Preparing TPO skin: 100 parts by weight of TPO resin, 3 parts by weight of the color masterbatch obtained in step 2 and 1 part by weight of a stabilizer are added to a twin-screw extruder; the components are heated to melt and mixed evenly, and the mixture is extruded at an extrusion temperature of 160 - 220°C, to obtain a TPO skin.

### Example 5

A TPO skin is prepared by the following steps:
1) Providing acidic carbon black: prepared by the channel method, as in Example 1.
2) Preparing color masterbatch: color powder, acidic carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| acidic carbon black | 10 parts by weight |
| TPO | balanced to 100 parts by weight |

3) Preparing TPO skin: 100 parts by weight of TPO resin, 3 parts by weight of the color masterbatch obtained in step 2 and 1 part by weight of a stabilizer are added to a twin-screw extruder; the components are heated to melt and mixed evenly, and the mixture is extruded at an extrusion temperature of 160 - 220°C, to obtain a TPO skin.

### Example 6

A PP skin is prepared by the following steps:
1) Providing acidic carbon black: prepared by the channel method, as in Example 1.
2) Preparing color masterbatch: color powders, acidic carbon black and PP dispersing resin are put into a twin-screw extruder for granulation according to the following color masterbatch formula (total number of parts = 100 parts by weight):

| | |
|---|---|
| TiO₂ | 0.20 parts by weight |
| acidic carbon black | 0.55 parts by weight |
| Fe2O3 | 0.10 parts by weight |
| PP | balanced to 100 parts by weight |

3) Preparing PP skin: 100 parts by weight of PP resin, 3 parts by weight of the color masterbatch obtained in step 2 and 1 part by weight of a stabilizer are added to a twin-screw extruder; the components are heated to melt and mixed evenly, and the mixture is extruded at an extrusion temperature of 160 - 220°C, to obtain a PP skin.

### Example 7

A PE skin is prepared by the following steps:
1) Providing acidic carbon black: prepared by the channel method, as in Example 1.
2) Preparing color masterbatch: color powders, acidic carbon black and PE dispersing resin are put into a twin-screw extruder for granulation according to the following color masterbatch formula (total number of parts = 100 parts by weight):

| | |
|---|---|
| TiO₂ | 0.20 parts by weight |
| acidic carbon black | 0.55 parts by weight |
| organic blue green | 0.10 parts by weight |
| PE | balanced to 100 parts by weight |

3) Preparing PE skin: 100 parts by weight of PE resin, 3 parts by weight of the color masterbatch obtained in step 2 and 1 part by weight of a stabilizer are added to a twin-screw extruder; the components are heated to melt and mixed evenly, and the mixture is extruded at an extrusion temperature of 170 - 190°C, to obtain a PE skin.

### Example 8

A POE skin is prepared by the following steps:
1) Providing acidic carbon black: prepared by the channel method, as in Example 1.
2) Preparing color masterbatch: color powders, acidic carbon black and POE dispersing resin are put into a twin-screw extruder for granulation according to the following color masterbatch formula (total number of parts = 100 parts by weight):

| | |
|---|---|
| TiO₂ | 0.20 parts by weight |
| acidic carbon black | 0.55 parts by weight |
| ultramarine | 0.10 parts by weight |
| POE | balanced to 100 parts by weight |

3) Preparing POE skin: 100 parts by weight of POE resin, 3 parts by weight of the color masterbatch obtained in step 2 and 1 part by weight of a stabilizer are added to a twin-screw extruder; the components are heated to melt and mixed evenly, and the mixture is extruded at an extrusion temperature of 160 - 220°C, to obtain a POE skin.

### Example 9

A TPO skin is prepared by the following steps:
1) Providing acidic carbon black: prepared by the channel method, as in Example 1.
2) Preparing color masterbatch: color powders, acidic carbon black and TPO dispersing resin are put into a twin-screw extruder for granulation according to the following color masterbatch formula (total number of parts = 100 parts by weight):

| | |
|---|---|
| acidic carbon black | 0.275 parts by weight |
| common carbon black | 0.275 parts by weight |
| organic green | 0.25 parts by weight |
| Cr₂O₃.Sb₂O₃.31TiO₂ | 0.05 parts by weight |
| TPO | balanced to 100 parts by weight |

3) Preparing TPO skin: 100 parts by weight of TPO resin, 3 parts by weight of the color masterbatch obtained in step 2 and 1 part by weight of a stabilizer are added to a twin-screw extruder; the components are heated to melt and mixed evenly, and the mixture is extruded at an extrusion temperature of 160 - 220°C, to obtain a TPO skin.

Next, the acidic carbon black in the color masterbatch formula is replaced with common carbon black (non-acidic carbon black), and the skins of Comparative examples 1 - 9 are prepared, see below for details.

### Comparative example 1

A TPO skin is prepared by the following steps:
1) Preparing color masterbatch: color powders, common carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| common carbon black | 0.55 parts by weight |
| Fe2O3 | 0.05 parts by weight |
| Cr₂O₃.Sb₂O₃.31TiO₂ | 0.05 parts by weight |
| TPO | balanced to 100 parts by weight |

2) Preparing TPO skin: 100 parts by weight of TPO resin, 3 parts by weight of the color masterbatch obtained in step 1 and 1 part by weight of a stabilizer are added to a twin-screw extruder; the components are heated to melt and mixed evenly, and the mixture is extruded at an extrusion temperature of 160 - 220°C, to obtain a TPO skin.

### Comparative example 2

A TPO skin is prepared by the following steps:
1) Preparing color masterbatch: color powders, common carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| common carbon black | 0.55 parts by weight |
| organic red | 0.05 parts by weight |
| Cr₂O₃.Sb₂O₃.31TiO₂ | 0.05 parts by weight |
| TPO | balanced to 100 parts by weight |

2) Preparing TPO skin: 100 parts by weight of TPO resin, 3 parts by weight of the color masterbatch obtained in step 1 and 1 part by weight of a stabilizer are added to a twin-screw extruder; the components are heated to melt and mixed evenly, and the mixture is extruded at an extrusion temperature of 160 - 220°C, to obtain a TPO skin.

### Comparative example 3

A TPO skin is prepared by the following steps:
1) Preparing color masterbatch: color powders, common carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| common carbon black | 3 parts by weight |
| ZnFe₂O₄ | 0.10 parts by weight |
| TPO | balanced to 100 parts by weight |

2) Preparing TPO skin: 100 parts by weight of TPO resin, 3 parts by weight of the color masterbatch obtained in step 1 and 1 part by weight of a stabilizer are added to a twin-screw extruder; the components are heated to melt and mixed evenly, and the mixture is extruded at an extrusion temperature of 160 - 220°C, to obtain a TPO skin.

### Comparative example 4

A TPO skin is prepared by the following steps:
1) Preparing color masterbatch: color powders, common carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| common carbon black | 8 parts by weight |
| organic red yellow | 0.10 parts by weight |
| TPO | balanced to 100 parts by weight |

2) Preparing TPO skin: 100 parts by weight of TPO resin, 3 parts by weight of the color masterbatch obtained in step 1 and 1 part by weight of a stabilizer are added to a twin-screw extruder; the components are heated to melt and mixed evenly, and the mixture is extruded at an extrusion temperature of 160 - 220°C, to obtain a TPO skin.

### Comparative example 5

A TPO skin is prepared by the following steps:
1) Preparing color masterbatch: color powder, common carbon black and TPO dispersing resin are put into a twin-screw extruder for granulation according to the following color masterbatch formula (total number of parts = 100 parts by weight):

| | |
|---|---|
| TiO₂ | 0.20 parts by weight |
| common carbon black | 10 parts by weight |
| TPO | balanced to 100 parts by weight |

2) Preparing TPO skin: 100 parts by weight of TPO resin, 3 parts by weight of the color masterbatch obtained in step 1 and 1 part by weight of a stabilizer are added to a twin-screw extruder; the components are heated to melt and mixed evenly, and the mixture is extruded at an extrusion temperature of 160 - 220°C, to obtain a TPO skin.

### Comparative example 6

A PP skin is prepared by the following steps:
1) Preparing color masterbatch: color powders, common carbon black and PP dispersing resin are put into a twin-screw extruder for granulation according to the following color masterbatch formula (total number of parts = 100 parts by weight):

| | |
|---|---|
| TiO₂ | 0.20 parts by weight |
| common carbon black | 0.55 parts by weight |
| Fe2O3 | 0.10 parts by weight |
| PP | balanced to 100 parts by weight |

2) Preparing PP skin: 100 parts by weight of PP resin, 3 parts by weight of the color masterbatch obtained in step 1 and 1 part by weight of a stabilizer are added to a twin-screw extruder; the components are heated to melt and mixed evenly, and the mixture is extruded at an extrusion temperature of 160 - 220°C, to obtain a PP skin.

### Comparative example 7

A PE skin is prepared by the following steps:
1) Preparing color masterbatch: color powders, common carbon black and PE dispersing resin are put into a twin-screw extruder for granulation according to the following color masterbatch formula (total number of parts = 100 parts by weight):

| | |
|---|---|
| TiO₂ | 0.20 parts by weight |
| common carbon black | 0.55 parts by weight |
| organic blue green | 0.1 parts by weight |
| PE | balanced to 100 parts by weight |

2) Preparing PE skin: 100 parts by weight of PE resin, 3 parts by weight of the color masterbatch obtained in step 1 and 1 part by weight of a stabilizer are added to a twin-screw extruder; the components are heated to melt and mixed evenly, and the mixture is extruded at an extrusion temperature of 170 - 190°C, to obtain a PE skin.

### Comparative example 8

A POE skin is prepared by the following steps:
1) Preparing color masterbatch: color powders, common carbon black and POE dispersing resin are put into a twin-screw extruder for granulation according to the following color masterbatch formula (total number of parts = 100 parts by weight):

| | |
|---|---|
| TiO₂ | 0.20 parts by weight |
| common carbon black | 0.55 parts by weight |
| ultramarine | 0.10 parts by weight |
| POE | balanced to 100 parts by weight |

2) Preparing POE skin: 100 parts by weight of POE resin, 3 parts by weight of the color masterbatch obtained in step 1 and 1 part by weight of a stabilizer are added to a twin-screw extruder; the components are heated to melt and mixed evenly, and the mixture is extruded at an extrusion temperature of 160 - 220°C, to obtain a POE skin.

### Comparative example 9

A TPO skin is prepared by the following steps:
1) Preparing color masterbatch: color powders, common carbon black and TPO dispersing resin are put into a twin-screw extruder for granulation according to the following color masterbatch formula (total number of parts = 100 parts by weight):

| | |
|---|---|
| common carbon black | 0.55 parts by weight |
| organic green | 0.25 parts by weight |
| Cr₂O₃.Sb₂O₃.31TiO₂ | 0.05 parts by weight |
| TPO | balanced to 100 parts by weight |

2) Preparing TPO skin: 100 parts by weight of TPO resin, 3 parts by weight of the color masterbatch obtained in step 1 and 1 part by weight of a stabilizer are added to a twin-screw extruder; the components are heated to melt and mixed evenly, and the mixture is extruded at an extrusion temperature of 160 - 220°C, to obtain a TPO skin.

For Examples 1 - 9 and Comparative examples 1 - 9, the skin surface during extrusion is observed. If scraping is observed between the equipment and the skin and scratching is observed on the skin surface, this shows that color powder has precipitated; conversely, if no scraping between the equipment and the skin is found and no scratching on the skin surface is found, this shows that no color powder has precipitated. The specific observation results are listed in the table below.

| | Observation results | | Observation results |
|---|---|---|---|
| Example 1 | No precipitation | Comparative example 1 | Precipitation |
| Example 2 | No precipitation | Comparative example 2 | Precipitation |
| Example 3 | No precipitation | Comparative example 3 | Precipitation |
| Example 4 | No precipitation | Comparative example 4 | Precipitation |
| Example 5 | No precipitation | Comparative example 5 | Precipitation |
| Example 6 | No precipitation | Comparative example 6 | Precipitation |
| Example 7 | No precipitation | Comparative example 7 | Precipitation |
| Example 8 | No precipitation | Comparative example 8 | Precipitation |
| Example 9 | No precipitation | Comparative example 9 | Precipitation |

It can be determined from the observation results that no color precipitates during skin processing in Examples 1 - 9, in which the color masterbatch contains acidic carbon black and inorganic color powder or contains acidic carbon black and mixed inorganic/organic color powders; conversely, color powder precipitates during skin processing in Comparative examples 1 - 9, in which the color masterbatch only has common carbon black added and does not contain acidic carbon black.

It will be understood that the embodiments above are merely exemplary embodiments employed for the purpose of explaining the principles of the present invention, but the invention is not limited to these. Those skilled in the art could make various changes and improvements without departing from the spirit and substance of the invention, and such changes and improvements are also regarded as being within the scope of protection of the invention.

## Claims

1. A polymer composition resistant to color powder precipitation, the polymer composition containing a color powder system in which an inorganic color powder and carbon black are mixed, wherein the carbon black contains acidic carbon black obtained by oxidation.

2. The polymer composition as claimed in claim 1, wherein the acidic carbon black is high-structure carbon black, having a specific surface area of 100 - 1000 m²/g or greater than 1000 m²/g.

3. The polymer composition as claimed in claim 1, wherein the color powder system contains an organic color powder.

4. The polymer composition as claimed in claim 1, wherein the carbon black consists of the acidic carbon black alone.

5. The polymer composition as claimed in claim 1, wherein the polymer composition is a rubber and/or plastic composition.

6. The polymer composition as claimed in claim 5, wherein the polymer composition comprises a non-polar resin.

7. The polymer composition as claimed in claim 6, wherein the resin in the polymer composition is one or more of PP, PE, TPO, TPV or POE.

8. The polymer composition as claimed in any one of claims 1 - 7, wherein the color powder system is contained in the polymer composition in the form of color masterbatch.

9. The polymer composition as claimed in claim 8, wherein the color masterbatch contains a dispersing resin.

10. The polymer composition as claimed in claim 8, wherein the content of the acidic carbon black in the color masterbatch is more than 0 wt% but not more than 70 wt%, preferably not more than 50 wt%.

11. The polymer composition as claimed in claim 10, wherein the content of the acidic carbon black in the color masterbatch is not more than 20 wt%, preferably not more than 10 wt%.

12. A color masterbatch resistant to color powder precipitation, comprising an inorganic color powder, carbon black and a dispersing resin, wherein the carbon black contains acidic carbon black obtained by oxidation.

13. The color masterbatch as claimed in claim 12, wherein the acidic carbon black is high-structure carbon black, having a specific surface area of 100 - 1000 m²/g or greater than 1000 m²/g.

14. An artificial leather, comprising a skin prepared from the polymer composition as claimed in any one of claims 1-11.
